# EUROPEAN PATENT SPECIFICATION

(11) **EP 3 779 341 B1**
(45) Date of publication and mention of the grant of the patent: **01.12.2021**
(21) Application number: 19191778.0
(22) Date of filing: 14.08.2019
(51) Int. Cl.: F27B 7/20, C04B 7/43

(54) **CONDUIT OF A CALCINER IN A CEMENT CLINKER PLANT**
LEITUNG EINES KALZINATORS IN EINEM ZEMENTKLINKERWERK
CONDUIT D'UN FOUR DE CALCINATION DANS UNE INSTALLATION DE CLINKER DE CIMENT

(43) Date of publication of application: 17.02.2021
(73) Proprietor: Alite GmbH, 31535 Neustadt (DE)
(72) Inventor: Besdo, Silke, 31535 Neustadt (DE); Mathai, Robert, 31535 Neustadt (DE); Bachlberger, Thomas, 31535 Neustadt (DE); Punge, Petr, 31535 Neustadt (DE)
(74) Representative: Lohr, Jöstingmeier & Partner

(56) References cited:
- EP-A1- 0 003 123
- EP-A1- 2 690 074
- FR-A1- 2 538 521

## Description

### Field of the invention

The invention relates to cement clinker manufacturing and in particular to a calciner of a cement clinker plant. The calciner has a conduit enclosing a reactor space by a side wall. The side wall defines an inlet in and an outlet out of the reactor space, thereby enabling a macroscopic flow of a fluid via the enclosed reactor space along a trajectory from the inlet to the outlet.

### Description of the related art

Cement clinker, clinker for short, is the key intermediate product in the manufacture of concrete. Manufacture of clinker typically comprises prewarming of ground raw material (as well referred to as 'raw meal') in a pre-heater tower by direct contact of the raw meal with exhaust gas from a rotary kiln. The preheated raw material is subsequently provided to a pre-calcining unit, the so called calciner and from there into the rotary kiln. In the kiln, calcination is finalized and the clinker is sintered. The sintered clinker is discharged from the hot end of the rotary kiln onto a cooling grate of a clinker cooler. The clinker resting on top of the cooling grate is cooled by direct contact with a coolant. Typically, the coolant is a gas or a mixture of gases, usually air. A portion of the coolant is strongly heated while cooling the clinker down, at least in the area close to the kiln. This strongly heated coolant has a temperature of approximately 750-1300°C and carries a high amount of dust. The heated coolant is extracted from the clinker cooler at the kiln hood and/or the cooler roof and fed via a so-called tertiary air duct to the calciner. The heated coolant-dust stream is usually referred to as tertiary air. This tertiary air can be used for preprocessing of the raw material in the calciner or an upstream combustion or gasification unit, such as a combustion chamber. Often kiln exhaust gas is as well fed to the downstream end of the calciner. The calciner is typically essentially a conduit with a circular cross section in which a mixture of fuel, raw- material and hot gases (e.g. said tertiary air, kiln exhaust gas, ...) including oxygen (O₂) react to heat the raw material and to at least pre-calcine the raw meal. The process in the calciner thus includes a so-called secondary firing, requiring oxygen. Thus, a calciner is a flow reactor providing a corresponding reactor space.

The calciner is mostly an elongated mostly vertically extending conduit in which the mixture flows essentially vertically upwards while the reactions (combustion and pre-calcination) take place. The upstream end is thus at the bottom and the downstream end at the top, as the mixture of gas, fuel, raw material and residues flows from the bottom end to the top end. The top end of the calciner is connected by so called connection tubes to a cyclone (or any other gas-solid separation means) in the vicinity of the kiln's raw meal inlet for separating at least a majority of the pre-calcined raw meal (and solid fuel residues) from the hot gases. The pre-calcined raw material is provided to the kiln and the hot gases can be used as a heat source, typically in the pre-heater tower.

In other words, the raw materials which are necessary for the production of cement clinker are at least partly de-carbonized in the calciner, using the thermal energy provided by the tertiary air and optionally the kiln exhaust gases, directly, whereas the oxygen contained in the tertiary air is used for the combustion of fuel in the secondary firing, to further increase the temperature of the raw material in the mixture.

A typical flow of the mixture in the calciner is essentially laminar, as there is essentially no mixing of the gas flow orthogonal to the flow direction. Inhomogeneities in the distribution of raw material, fuel and oxygen at the inlet end of the calciner are thus essentially maintained while the mixture of fuel, gas and raw materials reacts. Thus, the temperature, fuel, CO₂, O₂ and CO-concentration as well as raw material concentration is in-homogeneous over the cross section of the calciner. For example, a piece (including droplets) of fuel in the calciner may be surrounded by gas having a certain oxygen content. Thus, initially the fuel and the oxygen react as intended, but when the oxygen content decreases, the combustion may be incomplete causing a raised CO-concentration. Another piece of fuel may be surrounded by a gas with a higher oxygen content, enabling the another piece of fuel to entirely react as intended with the oxygen in its vicinity and potentially there may be even some oxygen left. Accordingly, in this portion of the stream the CO-concentration is lower than in other portions of the stream. The temperature may have a local maximum, as well. These inhomogeneities are problematic, as they may lead to an inhomogeneous pre-calcination of the raw material and in addition to uncontrolled oxidation of CO or other combustibles in the cyclone or any other downstream (referencing here to the flow of the gas) gas treatment. An uncontrolled oxidation may even be discontinuous, like an explosion and even if it is continuous, heat is produced in a section of the clinker plant where it is not required, and which section is typically not designed for the corresponding elevated temperatures. The situation is even worse, if the calciner exhaust gases are split at its top and provided to two connection tubes connecting the calciner with two parallelly operating pre-heater towers (via separate gas-solid separation means): In this case the gas inlet temperatures of the two pre-heaters can be different. Further, the CO-, O₂-, CO₂-, fume-, etc. concentrations in two streams provided to the two pre-heater towers are different. This is not acceptable when designing a cement clinker plant.

To address these problems it has been suggested to place a cyclone (see DE 40 26 814 C2) for separating particles from the gas at the top end of calciners and to recirculate the particles into the calciner. The degree of pre-calcination is enhanced by the suggestion of DE 40 26 814 C2.

EP 0 003 123 A1 suggests a calciner with a conical upright chamber. Kiln exhaust gas enters at the bottom portion of the chamber and flows upwards, passes fuel injectors and an air inlet for receiving preheated air from a clinker cooler exhaust. At the bottom portion of the chamber are guide vanes providing an angular momentum to the kiln exhaust gas flowing upwards. The guide vanes enable to adjust the cooler exhaust air to secondary air proportion in the reaction space above the cooler exhaust air inlet.

FR 2538521 A1 and EP 2690074 A1 each suggest a calciner with longitudinal symmetry axis. The calciners have a varying free diameter to adjust the flow velocity of the raw meal suspension in the respective sections of the calciner.

### Summary of the invention

The invention is based on the observation that the additional cyclone has the disadvantage of being huge, heavy and expensive. In particular, retrofitting of existing installations with a calciner is difficult if not impossible as there is often simply no space for a bulky cyclone. In addition, the solid-gas separation at this stage of the process is problematic as the hot ground raw material may adhere. Further, already existing pre-heater towers are usually not designed to support the additional load of a cyclone.

The problem to be solved by the invention is to enable retrofitting existing cement clinker installations with a calciner even when there is limited space for an additional cyclone or when existing pre-heater towers cannot take the additional load of a cyclone.

A Solution to the problem is described in the independent claim 1. The dependent claims relate to further improvements of the invention.

A usual, a calciner of a cement clinker plant according to the invention has a conduit providing a continuous flow reactor space. The conduit thus has a reactor space being enclosed by a side wall of the conduit, defining an inlet in and an outlet out of the enclosed reactor space, thereby enabling a macroscopic flow of a fluid via the enclosed reactor space along a trajectory from the inlet to the outlet. The fluid can be a mixture of at least two of tertiary air, fuel, raw material, fumes and/or clinker dust. The trajectory is preferably a straight line. The trajectory may be curved as well, but for simplicity herein we will consider it to be a straight line. The trajectory may be considered as a line being positioned in the center of the reactor space. The conduit has at least a first section with a first sidewall portion having a first surface enclosing a first portion of the reactor space.

In a preferred embodiment, this at least one first section is below the upper end of the calciner, i.e. below the typical U-shaped section of a calciner and preferably forms a part of the rising pipe being upstream of the U-shaped top section. It can as well be a portion of the downpipe, i.e. downstream of the U-shaped top section.

Preferably, the first section has at least one first surface portion being inclined towards the trajectory and a second surface portion being inclined away from the trajectory. Inclining a surface portion towards the trajectory means, as usual that the distance between the trajectory (which is defined as the line in the middle of the first section) and the first surface portion decreases in the flow direction. Accordingly, a surface being inclined away from the trajectory has an increasing distance from the trajectory in the flow direction. These inclinations of the surface portions enable to create vortices in the flow which provide for more homogeneous distribution of the constituents of the flowing fluid in the calciner. Another advantage is that the fuel efficiency is increased and the length of the calciner can be reduced.

For example, by inclining the first and second surfaces as described above, the cross-sectional area of the reaction space may be varied along the trajectory, i.e. in the direction of the intended fluid flow. Thereby, turbulences can be produced in the fluid. These turbulences reduce inhomogeneities in the fluid across the cross-sectional area of the conduit. In other words, the first section preferably has a first portion and a downstream second portion, wherein the cross-sectional area in the first portion may de- or increase whereas the cross-sectional area in the second portion in-or decreases along the trajectory, respectively. For clarification it is noted, that as usual, a sequence of section planes being orthogonal to the trajectory defines a corresponding sequence of cross-sectional areas of the reactor space along the trajectory, respectively.

For example, the first section may be downstream of a receiving section of the conduit. For example, the conduit may be installed at least essentially upright (i.e. vertical°±15°, ±10°, even more preferred ±5°, or better) to provide a corresponding upward fluid flow. In this case the first section may be positioned above a receiving section.

The side wall portion of the receiving section may enclose a portion of the reactor space, which is the reactor space portion of the receiving section. Preferably, the side wall of the receiving section encloses an at least essentially circular cylindrical reactor space portion. At least essentially circular cylindrical means here, that the deviation of the radius r(cp) from the mean radius rm are smaller or equal 15% (0.85· rₘ≤r(ϕ) ≤1.15·rₘ, preferably 0.9· rₘ≤r(ϕ) ≤1.1·rₘ, even more preferred 0.95· rₘ≤r(ϕ) ≤1.05·rₘ or even 0.975· rₘ≤r(ϕ) ≤1.025·rₘ, or better; as usual ϕ indicates an angle in a section plane orthogonal to the cylinder axis). In practice, the wall enclosing the reactor space has a metal skin with some lining or (inner) cladding of some fire-proof material, like refractory, bricks or other kind of fire-proof materials. Thus, the surface defining the reactor space of the receiving section is in practice not perfectly cylindrical but limited by the fire-proof material.

In between of the receiving section and the first section may be an intermediate section connecting the receiving section with the first section by an intermediate portion of the side wall, enclosing an intermediate portion of the reactor space. The cross-sectional area at the up-stream end of the intermediate section is preferably smaller than the cross-sectional area at the downstream end of the intermediate section. The intermediate section contributes to maintaining an essentially constant mean flow speed of the fluid in the receiving section and in the first section. Unintended deposition of raw material is reduced as well as the energy required for providing the fluid flow through the calciner. For example, the mean cross-sectional area along the trajectory of the first section may be equal within ±30% (preferably ±10%, more preferred ±5%, even more preferred ±2.5% or better) to the cross-sectional area of the receiving section.

In a preferred example, the first surface may have at least one segment hereinafter referred to as first first surface segment (wherein 'first first' indicates that there may be a second first surface segment as well). The first first surface segment may have a downstream (first) edge, wherein the edge extends along a first line, preferably along a first straight line. The downstream edge provides for turbulences in the fluid flow and thereby contributes to a homogenization of the fluid.

As already indicated above, the first surface may have at least one second first surface segment. This second first surface segment may have an up-stream edge. The upstream edge of the second first surface segment and the downstream edge of the first first surface segment may meet, thus the corresponding wall segments may form a first edge having the contour of the first line. In other words, the first first surface segment and the second first surface segment each have an edge, which extend along the first line. Preferably, the first first surface segment and the second first surface segment are inclined relative to each other.

These optional constructional improvements contribute both to a simple and thus cost efficient calciner and to an improved homogenization of the fluid.

In a particularly preferred example, the first line is inclined relative to the trajectory. This means that a parallel projection of at least one of the first lines onto the trajectory intersects the trajectory in a non-orthogonal angle. In a side view, the first line is thus inclined relative to the flow direction in the first section. This inclined edge provides for a rotation of the fluid around the trajectory. Thus, the direction of the (macroscopic, i.e. assumed laminar) fluid flow has two components, a first component being parallel to the trajectory and a second component being tangentially to a circular cylinder which is centered on the trajectory. The additional tangent component (being described by an angular speed) and thus the inclination of the first line does not necessarily enhance homogenization of the fluid over the cross sectional area, but it contributes to evenly distribute the products leaving the reactor via a Y-junction (i.e. a bifurcation as well referred to as y-piece) into two conduction tubes.

For example, the parallel projection of the first line may intersect the trajectory in an angle γ. The absolute value of the angle γ may take any value between 0° and 90°, i.e. 0< γ≤90°, for example 10° ≤ γ ≤80°, preferably 20° ≤ γ ≤70°. For example the absolute value of the angle γ may be at least essentially 45° (or 30°), wherein at least essentially means 45°±15° (or 30°±15°), preferably 45°±10° (or 30°±10°), even more preferred 45°±5° (or 30°±5°) or better. These angular ranges provide a preferred balance of additional energy consumption for propelling the fluid through the first section and angular velocity of the fluid flow.

In a particularly preferred example, the first surface is discontinuously symmetric under a rotation around an axis being defined by the trajectory portion of the first section. This may sound complicated, but it indicates, that there are multiple first and second surface segments defining multiple first lines (and thus a corresponding number of first edges) and that these elements are repetitively positioned around the trajectory and configured that a rotation of the first section in increments of 360° (2π) maps the first surface on itself. The rotation may be at an angle *α* of *360°*/*n* (i.e., *α=360°*/*n=2π*/*n*), wherein n is an integer with *n>1.* In practice smaller numbers of *n,* e.g. 1<*n*<17 (or 1<*n*<37) are preferred. The discontinuous symmetry simplifies construction as the constructional elements can have straight edges and plane surfaces, while at the same time the number of flow homogeneity increasing edges, surface segments, first lines, etc. is augmented.

The conduit may have at least one second section positioned downstream the first section, wherein the side wall portion of the second section has a second surface enclosing the reaction space of the second section. This second surface is preferably congruent to the first surface. For example, the first section and the second section may be identical and/or may be positioned one on top of the other. The second section may be rotated around the trajectory relative to the first section. In other words, mapping the second surface onto the first surface requires at least a rotation of the second surface around an axis being defined by the trajectory portion of the second section. Assuming the trajectory to be a straight line, in addition a translation parallel to the trajectory is required. If the trajectory is curved, additional rotations may be required. In a preferred example, the first and second surfaces are congruent and are discontinuously symmetric under a rotation around an axis being defined by the trajectory portion of the first or second section, respectively. In this example, the second portion is preferably rotated by half of the angle defining the optional discontinuous symmetry of the first surface (which is given by the smallest angle of rotation which maps the first surface onto itself). To stay in the above example the smallest angle may be α=360°/n. The rotation of the second section relative to the first section may then be β=360°/(m·n), wherein m may be an integer, preferably a small integer, e.g. *1<m<5,* alternatively: *1<m<17 or 1<m<37*). These measures as well improve evenly distributing products leaving the reactor via a Y-junction (i.e. a bifurcation as well referred to as y-piece) into two conduction tubes, while keeping construction costs low.

Preferably, there is an adapter section between the first section and the second section thereby simplifying assembly of the calciner. The adapter section may have an at least essentially circular cylindrical adapter surface. Alternatively, the cylindrical surface may be defined by a closed directing curve (c.f. Handbook of Mathematics, Bronshtein, Semendyayev, et al., Springer Berlin, 5th ed., Chapt. 3.3.3) having a discontinuous rotational symmetry, e.g. with an angle of β*=360°*/*(m·n)*, as defined above. Both alternatives simplify construction of the conduit. As already apparent, the adapter surface encloses the adapter section's portion of the reactor space.

In the same way (i.e. with or without adapter) any further number of preferably congruent sections may be connected to each other to enhance a homogeneous fluid in the calciner. Thus, there may be a third and/or a fourth and/or fifth section.

The conduit may form the calciner or be a part of the calciner. The calciner may be integrated in a cement clinker plant.

### Description of Drawings

In the following the invention will be described by way of example, without limitation of the general inventive concept, on examples of embodiment with reference to the drawings.
- Figure 1: shows a perspective view of a first example calciner with a bifurcation and conduction tubes.
- Figure 2: shows a top view of a first section of the calciner of Fig. 1.
- Figure 3: shows an example calciner with a bifurcation and conduction tubes.
- Figure 4a -d: show a first section of the calciner of Fig. 3.
- Figure 5a-d: shows a number of stacked first sections of a calciner
- Figure 6: shows a cement clinker plant with a calciner.

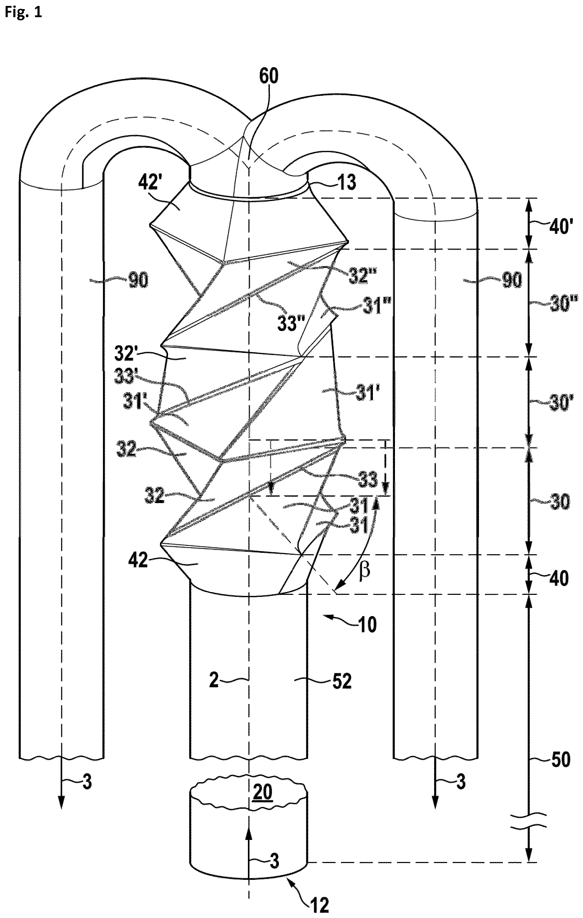

In figure 1 a first embodiment of calciner 10 of a cement clinker plant is shown. The calciner 10 has a conduit with an inlet 12. As indicated by an arrow 3, a fluid may flow along a trajectory 2 through the reaction space 20 inside the calciner 10. At the top of the calciner 10 is an optional bifurcation 60 enabling to connect the reaction space 20 and thus the conduit of the calciner 10 with two connection tubes 90, which may be considered as forming part of the calciner as well. The connection tubes 90 may each be connected via a separate gas-solid separation means with a kiln and a preheater tower.

The upstream portion of the calciner 10 may be considered as a receiving section 50. In this example, the receiving section 50 is at least essentially circular cylindrical, i.e. it has an essentially circular cylindrical sidewall 51 with a circular cylindrical inner surface 51 enclosing the respective portion of the reaction space 20. Herein, we use the same reference numeral for sidewall portions as for the respective inner surfaces enclosing the reaction space 20, because the side wall portions define the respective surfaces and thus the reaction space 20. As explained above, the invention provides for a particular shape of at least a portion of the reaction space 20, being defined by the surface enclosing the reaction space 20. Thus, describing the surface (being defined by the side wall(s)) is a description of the reaction space 20.

The downstream end of the receiving section 50 may be connected to the up-stream end of an intermediate section 40. The intermediate section 40 serves as an adapter for connecting the receiving section 50 with a first section 30 and has accordingly an intermediate portion 41 of the side wall with intermediate surface 41.

The first section 30 has an upstream end and may be connected to the downstream end of the intermediate section 40. As apparent, if the contour of the receiving section 50 and the first section 30 match, the intermediate section 40 may be omitted.

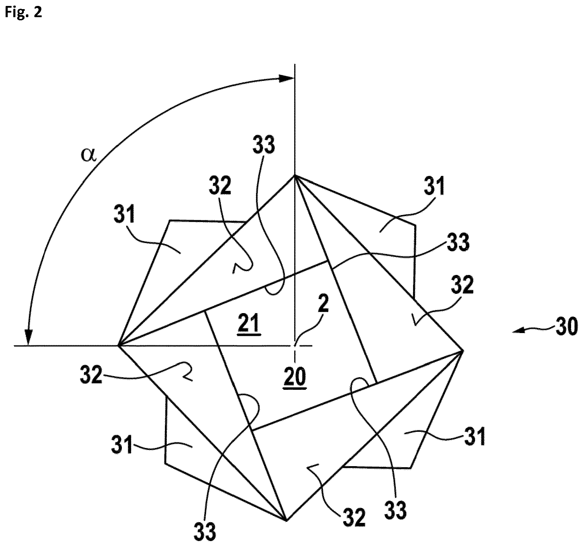

The first section 30 may have a first surface enclosing a first portion 21 of the reaction space 20 (see Fig. 2.). In this example, the first surface is defined by a number (in this example four, other positive integers may be possible as well) of first first surface segments 31 and second first surface segments 32. The first first surface segments 31 are inclined towards the trajectory 2 and each have a downstream (first) edge 33, which first edges 33 in this example each have the shape of a straight line (other shapes are possible as well). Due to the inclination, the distance of the downstream edges 33 to the trajectory 2 is shorter than the distance of the corresponding upstream edge of the first first surface segments 31.

An upstream edge of a second first surface segment 32 may be attached to these downstream edges 33, thus a corresponding second first wall section 32 may be attached to the first first wall section 31 thereby forming the first edge 33 as joint edge. These second first surface segments 32 may be inclined away from the trajectory 2, as depicted, i.e. the distance of the first edges 33 to the trajectory may be smaller than the distance of the downstream end of the second surfaces to the trajectory 2. The inclinations of the first and second first surfaces 31, 32 may induce a macroscopic vortex of the fluid flowing through the reactor space 20 and in addition turbulences providing for homogenization of the fluid flowing through the conduit. The macroscopic vortices provide for a comparatively low pressure drop, at least in relation to turbulences.

As can be seen in Fig. 1, the parallel projections of the edges 33 onto the corresponding section of the trajectory 2 may intersect the trajectory in a non orthogonal angle. In this specific example, the angle between the trajectory and the projections is about 30°, preferably 30°±15°, preferably 30°±10°, even more preferred 30°±5° or better; but other angles can be chosen as well.

In the depicted example of Fig. 1, the first surface consists of the first first surface segments 31 and the second first surface segments 32. It may include additional surface segments. In the depicted example, the first surface 31, 32 has an optional discontinuous rotational symmetry: A rotation of the first surface by any integer multiple of α, wherein *α=90°=360°*/*n* with *n=4* maps the surface onto itself (see Fig. 2). Other discontinuous rotational symmetries may be realized as well (i.e. other values for *n* as explained above).

Attached to the downstream end of the first section 30 may be an upstream end of a second section 30'. The second section 30' may be, as depicted, a copy of the first section 30, i.e. the second surface may consist of first and second second surface segments 31', 32'and may be congruent to the first and second first surface segments 31, 32. Except for the position in the conduit, the description of the first section 30 may be read as well on the description of the second section 30' and the third section 30", by simply adding a prime ' or two primes " to the reference numerals, respectively. Thus, in the depicted example, the optional second section 30' has a second surface which accordingly has first second and second second surfaces 31', 32'. The depicted example of the optional third section 30" has a third surface which accordingly has a first third surface 31" and a second third surface 32". An optional fourth section 30‴ (not shown) would thus have first and second fourth surface segments 31‴, 32‴ and so forth.

In the depicted example, the second section 30' is rotated relative to the first section by an angle β, wherein in this particular example β=α/2, as an example for β=360°/(m·n), as explained above, i.e. m and n can take other values than 2 and 4, as well. Thus, to map the second section 30' onto the first section 30, it is sufficient to rotate the second section 30' by the angle β and to translate it up-stream along the trajectory 2.

Downstream the second section 30' is an optional third section 30". The third section 30" may be, as depicted, a copy of the first section 30, as well, i.e. the third surface may have at least first and second (third) surface segments 31", 32". Thus, the third surface 31", 32" may be congruent to the first and second first surface segments 31, 32 as well as to the first and second second surface segments 31',32'. In principle the conduit of the calciner 10 has a number of first sections that are stacked onto each other. Only to enable a simple distinction, we will reference to these sections 30' and 30" by their positions relative to the first section 30.

The third section 30" may be connected via an optional downstream intermediate section 40' and an optional bifurcation 60 with at least one connecting tube 90.

As already apparent, the wording *'connecting sections of the conduit'* is intended to mean assembling the sections to provide a conduit providing a fluid communication between the sections of the conduit. A connection of two sections may be a direct connection as shown in Fig. 1 for the first section 30 and the second section 30' or as well an indirect connection as shown in Fig. 1 for the receiving section 50 and the first section 30 being connected to each other by the optional intermediate section 40 in between of them.

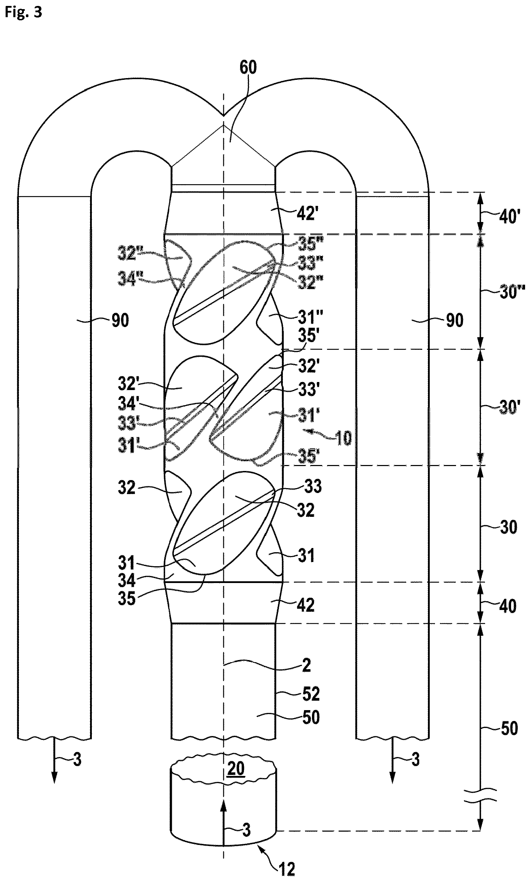

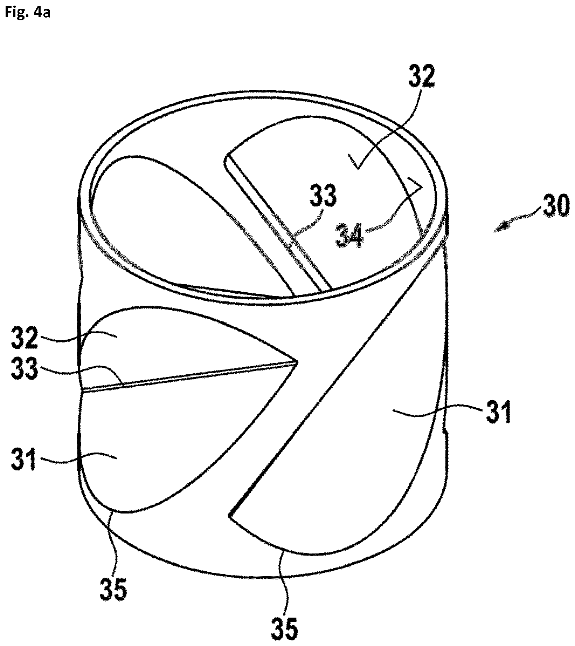

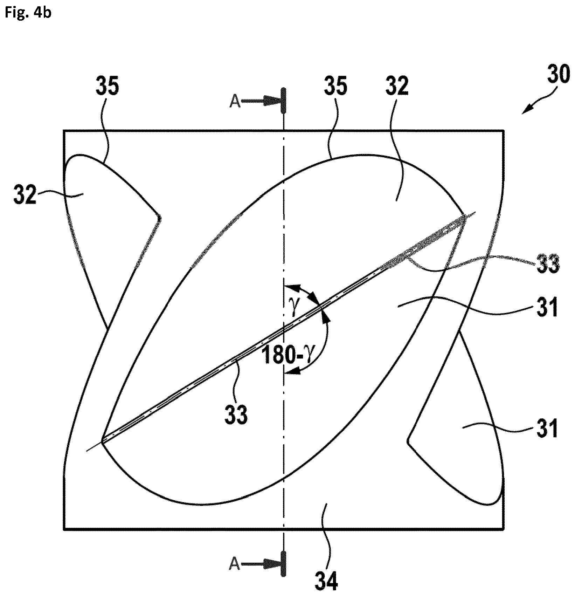

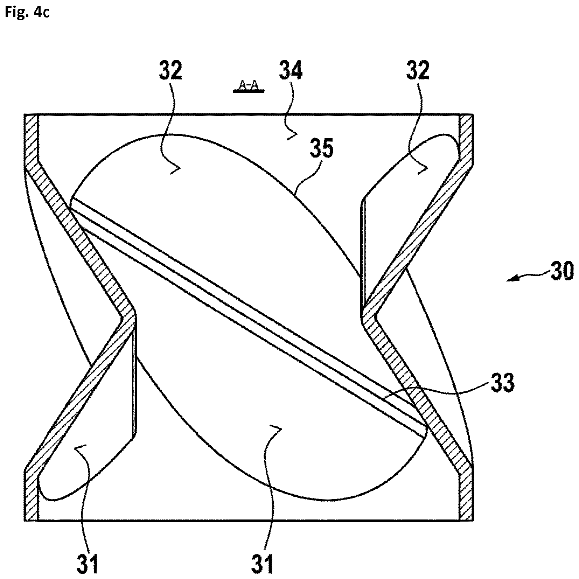

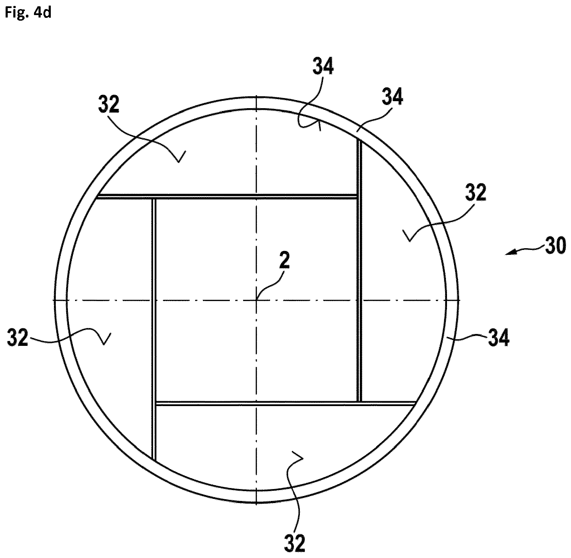

Another example is depicted in Figures 3 and 4a-d. The general construction is very similar to the first example as depicted in Fig. 1 and 2, wherein Fig. 3 corresponds to Fig. 1. The description of the first example can essentially be read on Fig. 3 and 4a-d as well and we will focus only on the differences of the second example to the first example. Fig. 4 a is perspective view of the first section 30, Fig. 4b a side view of the first section 30, Fig. 4c a sectional view of the first section 30 along the plane A-A as indicated in Fig. 4b, and Fig. 4d is a top view of the first section 30.

Like the first example, the calciner 10 in Fig. 3 and 4a-d has a conduit with multiple sections, a receiving section 50, an intermediate section 40, a first section 30, a second section 30', third section 30", and a downstream intermediate section 40' (see Fig. 3). As in the first example, any of these sections may be omitted, provided a single one of these remains part of the calciner 10. The main difference of the second example compared to the first example is the contour of the reaction space 21 of the first section 30 (and the second and third sections 30', 30", analogously) as defined by the side wall 31, 32 and 34 and the corresponding first first surface segment 31, the second first surface segment 32 and a third first surface segment 34. The third first surface segment 34 has the contour of a circular cylinder surface, wherein the cylinder axis defines the trajectory 2. The upstream end of the inclined first first surface segment 31 forms a second edge 35 with the third first surface 34. This second edge 35 is closed to form a ring and meets both ends of the (first) edge 33 (see Fig. 4a-d). As above, the first edge 33 is defined by the downstream edge of the first first surface segment 31 and the upstream edge of the second first surface segment 32. The downstream end of the second first surface 32 merges into the third first surface 34 thereby defining the downstream portion of the second edge 35.

As depicted in Fig. 4b, the edges 33 of the first section 30 are inclined by an angle γ relative to the trajectory 2. To be more precise, a parallel projection of the first line 33/ first edge 33 onto the trajectory intersects the trajectory as depicted in an angle γ (and as well 180°- γ). In this example γ=30°, but γ is not limited to this value. The angle γ can take any reasonable value between 0° and 90°(i.e. 0< γ ≤90°). For example, 10° ≤ γ ≤80°, preferably 20° ≤ γ ≤70°.

As in the first example, the first and second first surface segments 31, 32 (and the corresponding wall sections) can be at least essentially plane.

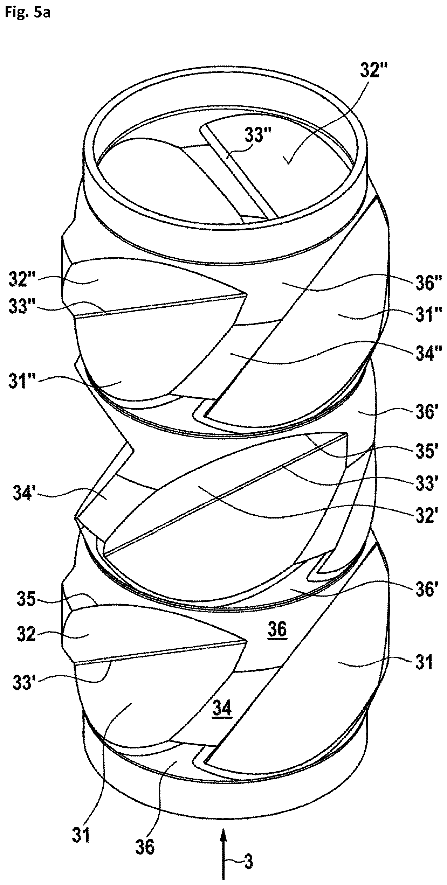

Figures 5a-d show another example of stacked first, second and third sections 30, 30', 30" of a calciner 10. Each of these first, second and third sections 30, 30', 30" may replace any of the first, second and third sections 30, 30', 30" in the examples being depicted in Fig. 1 and Fig. 3.

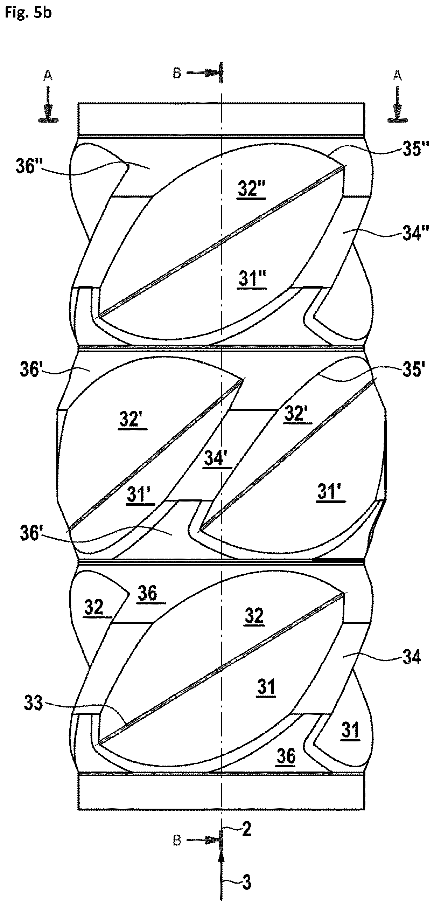

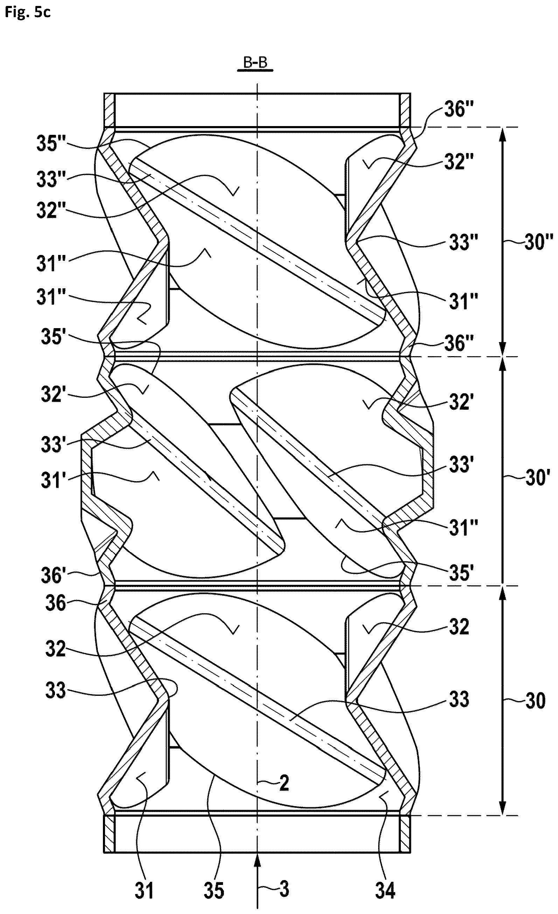

Fig. 5a is perspective view of the stacked sections 30, 30' and 30", Fig. 5b a side view of the of the stacked sections 30, 30' and 30", Fig. 5c a sectional view of the stacked sections 30, 30' and 30"along the plane B-B as indicated in Fig. 5b, and

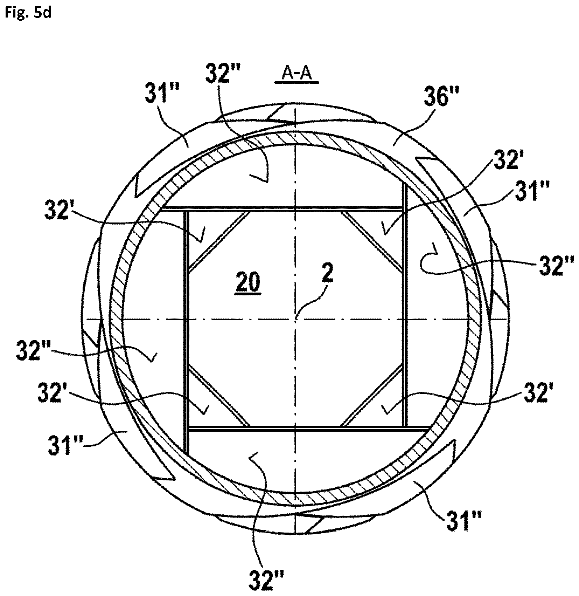

Fig. 5d a sectional view of the of the stacked sections 30, 30' and 30" along the plane A-A as indicated in Fig. 5b. Again, the description of the first, second and third sections above can be read on this example as well. We will mainly discuss differences of the example of Fig. 5a-d to the other examples.

Again, the stacked sections 30, 30'and 30"may be congruent to each other, as depicted and they may be rotated by an angle of β=45° relative to their respective neighbored section(s) 30, 30' and 30". Other angles are possible as well. For simplicity, we will refer to the first section 30 only, as a skilled person understands the corresponding details of the second and third sections 30', 30" can be identified by simply adding a prime or a double prime to the corresponding reference numeral.

As can be seen best in Fig. 5a, the first section has an upstream conical side wall portion 36, providing a fourth first surface segment 36. In the upstream conical sidewall portion, the radius of the reactor space 20 increases along the trajectory 2. The conical side wall portion 36 emerges into a cylindrical side wall portion 34. As can be seen, in this example the cylindrical side wall portion 34 consists of a number of congruent ring segments with a circular cylindrical symmetry. Thus, in this example the radius of the reactor space 20 remains constant where confined by these side wall portions 34. Downstream of the cylindrical side wall portions 34 may be another conical side wall portion 36 (providing a further fourth first surface segment 36), but in this downstream portion the radius of the reactor space decreases preferably at least essentially (±10° or better) to its initial value.

The first section 30 may further have at least one first first surface segment 31 being inclined towards the trajectory 2 and a second first surface segment 32 being inclined away from the trajectory 2. In the cross sectional view the first and second first surface segments 31 and 32 can be identified particularly easy. As can be seen in Fig. 5a to 5d, the first and second first surface segments 31 and 32 may form an edge 33, which may be inclined as explained with respect to Fig. 4b. These first and second first surface segments 31 and 32 may be delimited by a second edge 35.

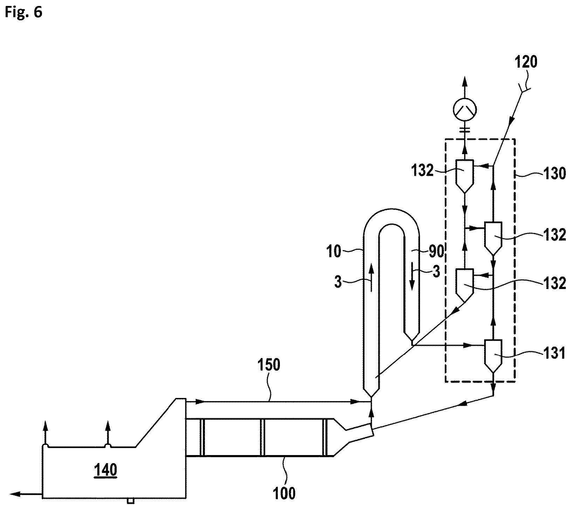

Figure 6 shows a cement clinker plant. Raw materials 120 are provided to a pre-heater tower 130. In the pre-heater tower 130, the raw materials 120 are prewarmed by flue gases from a kiln 100 and/or a calciner 10 using cylones 131. The preheated raw material is fed to the inlet of the calciner 10, e.g. to the inlet 12 of the calciner 10 in one of Figures 1 or 3. From the calciner 10 the raw material and the gas are provided via connection tube 90 to a cyclone 131 of the pre-heater tower 130. The calciner 10 may preferably have at least a first section 30 as depicted in Figures 1, 3 or 5. It may as well have a second or a third section as explained above. Additional sections may be provided as well. The pre-treated raw material is next fired in the rotary kiln 100 and released as clinker to a clinker cooler. In the clinker cooler the hot clinker is cooled down by a coolant. A portion of the heated coolant is provided by a tertiary air duct 150 to the inlet of the calciner 10 as well. Another portion of the heated coolant enters the kiln 100 and is used as secondary air. The remaining part of the heated coolant can be used to provide thermal energy to other (sub)processes.

The hot gas exiting the cyclone 131 may be used as heat source in the preheater tower 130. As apparent, for simplicity only a single connecting tube 90 and only a single preheater tower 130 are depicted. In practice, there may be multiple, e.g. two preheater towers 130. In this case each preheater tower 130 receives a portion of the gas raw material mixture via a corresponding connection tube 90 from the calciner 10.

### List of reference numerals

- 2: trajectory / longitudinal axis
- 3: direction of fluid flow
- 10: calciner
- 12: inlet
- 13: outlet
- 20: reaction space
- 21: reaction space of first section
- 30: first section
- 31: first first surface segment
- 32: second first surface segment
- 33: first edge (of the first section)
- 34: third first surface segment
- 35: second edge (of the first section)
- 36: fourth first surface segment
- 30': second section
- 31': first second surface segment
- 32': second second surface segment
- 33': first edge (of second section)
- 34': third second surface segment
- 35': second edge (of second section)
- 36": fourth second surface segment
- 30": third section
- 31": first third surface segment
- 32": second third surface segment
- 33": first edge (of third section)
- 34": third third surface segment
- 35": second edge (of the third section )
- 36": fourth third surface segment
- 40: (upstream) intermediate section
- 42: (upstream) intermediate portion of side wall / intermediate surface
- 40': (downstream) intermediate section
- 42': (downstream) intermediate portion of side wall / intermediate surface
- 50: receiving portion
- 52: receiving portion of side wall / receiving surface
- 60: Y-junction / bifurcation
- 90: connecting tube
- 100: kiln
- 120: raw material
- 130: pre-heater tower
- 131: cyclone
- 132: cyclone
- 140: clinker cooler
- 150: tertiary air duct

## Claims

1. A conduit for a calciner (10) of a cement clinker plant, wherein the conduit has an enclosed reaction space (20, 21) being enclosed by a side wall defining an inlet (12) in and an outlet (13) out of the enclosed reaction space (20, 21), thereby enabling a macroscopic flow (3) of a fluid via the enclosed reaction space (20, 21) along a trajectory (2) from the inlet (12) to the outlet (13), wherein the conduit has at least one first section (30) and wherein the side wall portion of the first section (30) has a first surface (31, 32) enclosing the reaction space (21) of the first section (30), wherein the first section (30) has at least one first first surface segment (31) being inclined towards the trajectory (2) and a second first surface segment (32) being inclined away from the trajectory (2) and wherein the at least one first first surface segment (31) has a downstream first edge (33), wherein the first edge (33) extends along a first line **characterized in that**
a parallel projection of at least one of the first edges (33) onto the trajectory intersects the trajectory (2) in a non-orthogonal angle.

2. The conduit of claim 1, **characterized in that**
the first section (30) is downstream of a receiving section (50) of the conduit, wherein a receiving portion of the side wall encloses the reaction space (20) of the receiving section (50) and wherein this receiving portion of the side wall (52) is at least essentially circular cylindrical, wherein at least essentially circular cylindrical means that the deviation of the radius *r*(*ϕ*) from the mean radius rm is smaller or equal 15%.

3. The conduit of claim 2, **characterized in that** in between of the receiving section (50) and the first section (30) is an intermediate section (40) connecting the receiving section (50) with the first section (30) by an intermediate portion of the side wall (42), wherein the cross sectional area of the conduit at the upstream end of the intermediate section is smaller than the cross sectional area of the conduit at the downstream end of the intermediate section (40).

4. The conduit of one of the claims 1 to 3, **characterized in that** the mean cross-sectional area along the trajectory (2) of the first section (30) is equal within ±30% to the cross sectional area of the receiving section (50).

5. The conduit of one of claims 1 to 4, **characterized in that** the at least one second first surface segment (32) has an upstream edge (33), and **in that** at least one of the at least one second first surface segments (32) meets one of the at least one first first surface segments (31) in the downstream edge (33) of the respective first first surface segment (31) with its upstream edge (33), wherein the upstream edge (33) extends along the first line.

6. The conduit of one of claims 1 to5, **characterized in that** the parallel projection of the at least one first line intersects the trajectory (2) in an angle of 45°±15°.

7. The conduit of one of the preceding claims, **characterized in that** the first surface (31, 32) is discontinuously symmetric under a rotation around an axis being defined by the trajectory (2) portion of the first section (30).

8. The conduit of one of the preceding claims, **characterized in that** the conduit has a second section (30') positioned downstream the first section (30), wherein the side wall portion of the second section (30') has a second surface (31', 32') enclosing the reaction space (21') of the second section (30'), and **in that** the second surface (31', 32') is congruent to the first surface (31, 32).

9. The conduit of claim 8, **characterized in that** mapping the second surface (31', 32', 34', 36') onto the first surface (31, 32, 34, 36) requires at least a rotation of the second surface (31', 32', 34', 36') around an axis being defined by the trajectory portion (2) of the second section (30').

10. Calciner for a cement clinker plant, comprising the conduit of one of the claims 1 to 9.

11. Cement clinker plant, comprising a calciner according to claim 10.

## Patentansprüche

1. Eine Leitung eines Kalzinators (10) eines Zementwerks, wobei die Leitung einen umschlossenen Reaktionsraum (20, 21) aufweist, welcher umschlossen ist von einer Seitenwand, die einen Einlaß (12) in und einen Auslaß (13) aus dem umschlossenen Reaktionsraum (20, 21) festlegt, wodurch ein makroskopischer Fluss (3) eines Fluids durch den umschlossenen Reaktionsraum (20, 21) entlang einer Bahnkurve (2) vom Einlaß (12) zum Auslaß (13) ermöglicht wird, wobei die Leitung mindestens einen ersten Abschnitt (30) aufweist und wobei das Seitenwandstück des ersten Abschnitts (30) eine erste Oberfläche (31, 32) aufweist, die den Reaktionsraum (21) des ersten Abschnitts (30) umschließt, wobei der erste Abschnitt (30) mindestens einen ersten ersten Oberflächenabschnitt (31) aufweist, der gegen die Bahnkurve (2) geneigt ist, sowie einen zweiten ersten Oberflächenabschnitt (32), der von der Bahnkurve (2) weg geneigt ist, und wobei der mindestens eine erste erste Oberflächenabschnitt (31) eine in Strömungsrichtung nachgelagerte erste Kante (33) aufweist, wobei die erste Kante (33) sich entlang einer ersten Linie erstreckt **dadurch gekennzeichnet, daß**
eine Parallelprojektion mindestens einer der ersten Kanten (33) auf die Bahnkurve die Bahnkurve (2) nicht rechtwinklig schneidet.

2. Die Leitung nach Anspruch 1, **dadurch gekennzeichnet, daß** der erste Abschnitt (30) einem Einlaßabschnitt (50) der Leitung in Strömungsrichtung nachgelagert ist, wobei ein Einlaßstück der Seitenwand den Reaktionsraum (20) des Einlaßabschnitts (50) umschließt und wobei dieses Einlaßstück der Seitenwand (52) zumindest im Wesentlichen kreiszylindrisch ist, wobei zumindest im Wesentlichen kreiszylindrisch bedeutet, daß die Abweichung des Radius *r*(*ϕ*) vom mittleren Radius rm kleiner oder gleich 15% ist.

3. Die Leitung nach Anspruch 2, **dadurch gekennzeichnet, daß** sich zwischen dem Einlaßabschnitt (50) und dem ersten Abschnitt (30) ein Zwischenabschnitt (40) befindet, der den Einlaßabschnitt (50) mit dem ersten Abschnitt (30) durch ein Zwischenstück der Seitenwand (42) verbindet, wobei die Querschnittsfläche der Leitung am in Strömungsrichtung vorgelagerten Ende des Zwischenstücks kleiner ist als die Querschnittsfläche der Leitung am in Strömungsrichtung nachgelagerten Ende des Zwischenstücks (40).

4. Die Leitung nach einem der Ansprüche 1 bis 3, **dadurch gekennzeichnet, daß** die mittlere Querschnittsfläche entlang der Bahnkurve (2) des ersten Abschnitts (30) innerhalb von ±30% gleich der Querschnittsfläche des Einlaßabschnitts (50) ist.

5. Die Leitung nach einem der Ansprüche 1 bis 4, **dadurch gekennzeichnet, daß**
der mindestens eine zweite erste Oberflächenabschnitt (32) eine in Strömungsrichtung vorgelagerte Kante (33) aufweist, und daß mindestens einer der zweiten ersten Oberflächenabschnitte (32) mit seiner in Strömungsrichtung vorgelagerten Kante (33) auf einen der mindestens einen ersten ersten Oberflächenabschnitte (31) an der in Strömungsrichtung nachgelagerten Kante (33) des entsprechenden ersten ersten Oberflächenabschnitts (31) trifft, wobei die in Strömungsrichtung vorgelagerte Kante (33) sich entlang der ersten Linie erstreckt.

6. Die Leitung nach einem der Ansprüche 1 bis 5, **dadurch gekennzeichnet, daß**
die Parallelprojektion der mindestens einen ersten Linie die Bahnkurve (2) in einem Winkel von 45°±15° schneidet.

7. Die Leitung nach einem der vorhergehenden Ansprüche, **dadurch gekennzeichnet, daß**
die erste Oberfläche (31, 32) diskontinuierlich symmetrisch ist unter einer Rotation um eine Achse, die durch einen Abschnitt der Bahnkurve (2) des ersten Abschnitts (30) definiert ist.

8. Die Leitung nach einem der vorhergehenden Ansprüche, **dadurch gekennzeichnet, daß**
die Leitung zweiten Abschnitt (30') aufweist, welcher dem ersten Abschnitt (30) in Strömungsrichtung nachgelagert ist, wobei der Seitenwandabschnitt des zweiten Abschnitts (30') eine zweite Oberfläche (31', 32') aufweist, die den Reaktionsraum (21') des zweiten Abschnitts (30') umschließt, und daß die zweite Oberfläche (31', 32') kongruent zur ersten Oberfläche (31, 32) ist.

9. Die Leitung nach Anspruch 8, **dadurch gekennzeichnet, daß** eine Abbildung der zweiten Oberfläche (31', 32', 34', 36') auf die erste Oberfläche (31, 32, 34, 36) mindestens eine Drehung der zweiten Oberfläche (31', 32', 34', 36') um eine Achse benötigt, wobei die Achse durch den Abschnitt der Bahnkurve (2) des zweiten Abschnitts (30') definiert ist.

10. Kalzinator für ein Zementklinkerwerk, umfassend die Leitung nach einem der Ansprüche 1 bis 9.

11. Zementklinkerwerk, umfassend einen Kalzinator nach Anspruch 10.

## Revendications

1. Conduit pour un calcinateur (10) d'une usine de clinker de ciment, dans lequel le conduit a un espace de réaction clos (20, 21) qui est clos par une paroi latérale définissant une entrée (12) et une sortie (13) hors de l'espace de réaction clos (20, 21), permettant ainsi un écoulement macroscopique (3) d'un fluide via l'espace de réaction clos (20, 21) suivant une trajectoire (2) de l'entrée (12) à la sortie (13), dans lequel le conduit a au moins une première section (30) et dans lequel la portion de paroi latérale de la première section (30) a une première surface (31, 32) fermant l'espace de réaction (21) de la première section (30), dans lequel la première section (30) a au moins un premier segment de première surface (31) qui est incliné vers la trajectoire (2) et un second segment de première surface (32) qui est incliné en éloignement de la trajectoire (2) et dans lequel l'au moins un premier segment de première surface (31) a un premier bord aval (33), dans lequel le premier bord (33) s'étend suivant une première ligne
**caractérisé en ce que**
une saillie parallèle d'au moins l'un des premiers bords (33) sur la trajectoire croise la trajectoire (2) en un angle non orthogonal.

2. Conduit selon la revendication 1, **caractérisé en ce que**
la première section (30) est en aval d'une section de réception (50) du conduit, dans lequel une portion de réception de la paroi latérale ferme l'espace de réaction (20) de la section de réception (50) et dans lequel cette portion de réception de la paroi latérale (52) est au moins essentiellement cylindrique circulaire, dans lequel au moins essentiellement cylindrique circulaire signifie que l'écart du rayon *r*(*ϕ*) par rapport au rayon moyen rm est inférieur ou égal à 15 %.

3. Conduit selon la revendication 2, **caractérisé en ce que**, entre la section de réception (50) et la première section (30) se trouve une section intermédiaire (40) raccordant la section de réception (50) à la première section (30) par une portion intermédiaire de la paroi latérale (42), dans lequel l'aire en section transversale du conduit à l'extrémité amont de la section intermédiaire est inférieure à l'aire en section transversale du conduit à l'extrémité aval de la section intermédiaire (40).

4. Conduit selon l'une des revendications 1 à 3, **caractérisé en ce que** l'aire en section transversale moyenne suivant la trajectoire (2) de la première section (30) est égale à ± 30 % près l'aire en section transversale de la section de réception (50).

5. Conduit selon l'une des revendications 1 à 4, **caractérisé en ce que**
l'au moins un second segment de première surface (32) a un bord amont (33), et **en ce qu'**au moins l'un de l'au moins un second segment de premières surfaces (32) rejoint l'un de l'au moins un premier segment de première surface (31) dans le bord aval (33) du premier segment de première surface (31) respectif avec son bord amont (33), dans lequel le bord amont (33) s'étend suivant la première ligne.

6. Conduit selon l'une des revendications 1 à 5, **caractérisé en ce que**
la saillie parallèle de l'au moins une première ligne croise la trajectoire (2) en un angle de 45° ± 15°.

7. Conduit selon l'une des revendications précédentes, **caractérisé en ce que**
la première surface (31, 32) est symétrique de manière discontinue selon une rotation autour d'un axe qui est défini par la portion de trajectoire (2) de la première section (30).

8. Conduit selon l'une des revendications précédentes, **caractérisé en ce que**
le conduit a une seconde section (30') positionnée en aval de la première section (30), dans lequel la portion de paroi latérale de la seconde section (30') a une seconde surface (31', 32') fermant l'espace de réaction (21') de la seconde section (30'), et **en ce que** la seconde surface (31', 32') est congruente avec la première surface (31, 32).

9. Conduit selon la revendication 8, **caractérisé en ce que** le mappage de la seconde surface (31', 32', 34', 36') sur la première surface (31, 32, 34, 36) nécessite au moins une rotation de la seconde surface (31', 32', 34', 36') autour d'un axe qui est défini par la portion de trajectoire (2) de la seconde section (30').

10. Calcinateur pour une usine de clinker de ciment, comprenant le conduit de l'une des revendications 1 à 9.

11. Usine de clinker de ciment, comprenant un calcinateur selon la revendication 10.
